# FASCICULE DE BREVET EUROPEEN

(11) **EP 3 194 916 B1**
(45) Date de publication et mention de la délivrance du brevet: **29.08.2018**
(21) Numéro de dépôt: 15763638.2
(22) Date de dépôt: 18.09.2015
(51) Int. Cl.: G01J 9/02

(54) **ANALYSEUR DE SURFACE D'ONDE ET PROCEDE POUR DETERMINER DES ECARTS DE PISTON ET DE TILT EXISTANT ENTRE PLUSIEURS FAISCEAUX LUMINEUX**
WELLENFRONTANALYSATOR UND VERFAHREN ZUR BESTIMMUNG VON DIFFERENZEN IN EINER AMPLITUDE UND NEIGUNG ZWISCHEN MEHREREN LICHTSTRAHLEN
WAVEFRONT ANALYSER AND A METHOD FOR DETERMINING DIFFERENCES IN AMPLITUDE AND TILT EXISTING BETWEEN SEVERAL LIGHT BEAMS

(30) Priorité: 19.09.2014 FR 1458876
(43) Date de publication de la demande: 26.07.2017
(73) Titulaire: ONERA (Office National d'Etudes et de Recherches Aérospatiales), 91120 Palaiseau (FR)
(72) Inventeur: BELLANGER, Cindy, F-91300 Massy (FR); DEPREZ, Maxime, F-02110 Grougis (FR); LOMBARD, Laurent, F-75013 Paris (FR); PRIMOT, Jérôme, F-92320 Chatillon (FR)
(74) Mandataire: Cabinet Plasseraud
(86) Numéro de dépôt international: PCT/EP2015/071519
(87) Numéro de publication internationale: WO 2016/042161

(56) Documents cités:
- FR-A1- 2 930 336
- US-B1- 7 106 457
- BELLANGER C ET AL: "Collective phase measurement of an array of fiber lasers by quadriwave lateral shearing interferometry for coherent beam combining", OPTICS LETTERS, OPTICAL SOCIETY OF AMERICA, US, vol. 35, no. 23, 1 décembre 2010 (2010-12-01), pages 3931-3933, XP001559155, ISSN: 0146-9592, DOI: 10.1364/OL.35.003931
- CINDY BELLANGER: "Design of a fiber-collimated array for beam combining", OPTICAL ENGINEERING, vol. 50, no. 2, 1 février 2011 (2011-02-01), page 025005, XP055202449, ISSN: 0091-3286, DOI: 10.1117/1.3537968
- BRUNO TOULON ET AL: "Holistic characterization of complex transmittances generated by infrared sub-wavelength gratings", OPTICS EXPRESS, vol. 16, no. 10, 1 mai 2008 (2008-05-01), pages 7060-7070, XP055202959,
- JÉRÔME PRIMOT ET AL: "Extended Hartmann Test Based on the Pseudoguiding Property of a Hartmann Mask Completed by a Phase Chessboard", APPLIED OPTICS, vol. 39, no. 31, 1 novembre 2000 (2000-11-01), page 5715, XP055202993, ISSN: 0003-6935, DOI: 10.1364/AO.39.005715
- J. PRIMOT ET AL: "Achromatic three-wave (or more) lateral shearing interferometer", JOURNAL OF THE OPTICAL SOCIETY OF AMERICA A, vol. 12, no. 12, 1 décembre 1995 (1995-12-01), page 2679, XP055202994, ISSN: 1084-7529, DOI: 10.1364/JOSAA.12.002679

## Description

La présente invention concerne un analyseur de surface d'onde par interférence. Elle concerne aussi un procédé pour déterminer des écarts de piston et de tilt qui existent entre plusieurs faisceaux lumineux susceptibles de produire des interférences.

Dans la présente description, les expressions surface d'onde et front d'onde sont supposées synonymes. De même, les vocables figure d'interférence et interférogramme sont aussi utilisés comme des synonymes. Le vocable tilt est utilisé pour désigner l'inclinaison d'une surface d'onde, et on désigne par écart de piston l'écart d'avancement moyen qui existe entre deux surfaces d'onde, chaque avancement de front d'onde étant mesuré selon sa direction de propagation.

L'écart de piston qui est ainsi défini s'applique quelque soit la composition spectrale du rayonnement lumineux. Pour cette raison, il peut aussi être appelé écart de piston absolu. Mais pour un rayonnement lumineux monochromatique, à cause de la périodicité spatiale du champ électromagnétique, seule une partie résiduelle de l'écart de piston est accessible lors d'une caractérisation statique, c'est-à-dire une caractérisation qui est réalisée à un seul instant. Cette partie résiduelle est appelée écart de piston résiduel, et est égale à [Part_Déc(Δp/λ)]·λ, où À désigne la longueur d'onde du rayonnement monochromatique, Δp est l'écart de piston absolu, et Part_Déc désigne la partie décimale du nombre qui est contenu entre les parenthèses. En particulier, lorsque des faisceaux lumineux monochromatiques ayant la même longueur d'onde sont combinés entre eux, seuls les écarts de piston résiduels qui existent entre les faisceaux pris deux-à-deux, n'ont d'importance. Mais à l'inverse, pour des impulsions de rayonnement lumineux ou pour un rayonnement lumineux polychromatique, seul l'écart de piston absolu présente un intérêt.

Certaines applications nécessitent de déterminer avec précision des écarts de piston et de tilt qui existent entre des surfaces d'onde respectives de plusieurs faisceaux lumineux.

Un tel besoin apparaît notamment lors de l'ajustement d'un miroir de télescope de type Keck. Un tel miroir est constitué par une juxtaposition de segments de miroir séparés, ayant chacun le plus souvent une limite périphérique hexagonale. Il est ainsi possible de former un miroir complet d'une dizaine de mètres de diamètre, avec des segments qui mesurent individuellement de l'ordre du mètre en diamètre. Mais les segments de miroir doivent être ajustés en hauteur et en inclinaison les uns par rapport aux autres, pour que la surface d'onde d'un faisceau lumineux qui est réfléchi par le miroir complet, ne présente pas de marches ni de variations brutales de pente qui seraient provoquées par des écarts de hauteur et d'inclinaison présents entre segments de miroir voisins.

Le besoin apparaît aussi lorsque les faisceaux lumineux de plusieurs sources laser sont combinés de manière cohérente pour obtenir un faisceau résultant d'intensité élevée. Le nombre des sources laser individuelles peut être considérable lorsque l'intensité lumineuse qui est voulue dans le faisceau de combinaison est très élevée. Dans le cas de sources laser monochromatiques, les surfaces d'onde individuelles des faisceaux qui proviennent respectivement des sources laser, et qui correspondent à une même valeur de phase, doivent être combinées sans décalages. La thèse de B. Toulon, soutenue le 20 novembre 2009 à l'Université Paris XI Orsay, et intitulée «La mesure d'amplitudes complexes par interférométrie à décalage multi-latéral», propose notamment une méthode qui est basée sur l'interférométrie à décalage quadri-latéral, pour mesurer les écarts de piston et de tilt entre 64 sources laser. Dans le cas de sources laser impulsionnelles, la combinaison des impulsions individuelles qui sont produites respectivement par les sources laser, n'est elle-même une impulsion dont la durée est similaire à celle des impulsions individuelles, que s'il n'existe pas de retard significatif pour certaines des impulsions individuelles par rapport à d'autres, ni d'écarts entre leurs directions de propagation. Pour ces applications de combinaison cohérente de faisceaux lumineux monochromatiques ou d'impulsions lumineuses, un analyseur de surface d'onde par interférence est utilisé, qui comprend :
- une entrée optique, destinée à recevoir un rayonnement lumineux possédant une surface d'onde initiale qui s'étend à travers cette entrée optique ;
- un diviseur de rayonnement, disposé pour produire, à partir de faisceaux lumineux qui proviennent respectivement de zones réduites à l'intérieur de l'entrée optique, plusieurs sous-faisceaux pour chaque faisceau lumineux, chaque sous-faisceau reproduisant des caractéristiques de la surface d'onde initiale existant dans la zone réduite correspondante ;
- des chemins optiques, agencés pour superposer des sous-faisceaux qui sont issus respectivement de zones réduites différentes à l'intérieur de l'entrée optique, et qui passent chacun par un chemin optique différent ;
- au moins un détecteur d'image, disposé pour acquérir des figures d'interférence qui sont produites par les sous-faisceaux superposés ; et
- un module de traitement, adapté pour déterminer, à partir des figures d'interférence, des écarts de piston et de tilt qui existent pour la surface d'onde initiale entre les zones réduites dont proviennent les sous-faisceaux superposés.

L'analyseur de surface d'onde est alors utilisé pour caractériser la surface d'onde globale qui résulte des surfaces d'onde individuelles, produites séparément par les sources laser.

Dans le dispositif de B. Toulon, le diviseur de rayonnement est un réseau diffractant qui produit quatre répliques de la surface d'onde initiale, correspondant aux combinaisons de deux ordres de diffraction, chacun égal à +1 ou à -1. Le diviseur de rayonnement produit donc quatre sous-faisceaux à partir de chaque faisceau lumineux. Les zones réduites à l'intérieur de l'entrée optique correspondent aux sections des faisceaux lumineux individuels qui proviennent des sources laser juxtaposées. Celles-ci sont équipées de microlentilles de sortie, pour que les faisceaux individuels aient chacun une structure de faisceau parallèle, ou collimaté. Le détecteur d'image acquiert alors une combinaison d'interférogrammes à quatre faisceaux, à partir de laquelle les écarts de piston et de tilt qui existent entre deux sources laser qui sont voisines dans l'entrée optique, peuvent être déterminés. En fonction de l'orientation du réseau diffractant par rapport au motif carré de la répartition des sources laser dans l'entrée optique, deux modes d'interférence différents sont obtenus. Mais dans ces deux modes, les interférogrammes présentent tous une structure complexe, avec des zones de recouvrement de différentes catégories. Pour cette raison, la détermination d'écarts de piston et de tilt à partir de n'importe lequel des interférogrammes est une tâche difficile.

L'article de C. Bellanger et al., qui est intitulé "Collective phase measurement of an array of fiber lasers by quadriwave lateral shearing interferometry for coherent beam combining", Optics Letters, 1er décembre 2010, vol. 35, No. 23, pp 3931-3933, concerne un interféromètre à décalage quadrilateral du même type.

A partir de cette situation, un but de la présente invention est de permettre de déterminer plus simplement des écarts de piston et de tilt qui existent entre des surfaces d'onde individuelles de faisceaux lumineux qui sont susceptibles de produire des interférences.

Pour cela, l'invention propose un analyseur de surface d'onde tel que défini dans la revendication 1. Cet analyseur de surface d'onde comprend un masque adapté pour sélectionner, au moyen d'ouvertures de ce masque, des zones d'intérêt disjointes à l'intérieur de l'entrée optique en tant que zones réduites, en occultant au moins en partie la surface d'onde initiale en dehors de ces zones d'intérêt, ou en occultant au moins en partie des faisceaux lumineux qui ne proviennent pas des zones d'intérêt. Les zones d'intérêt peuvent ainsi être déterminées par les ouvertures du masque, soit directement si le masque est situé à proximité de l'entrée optique de l'analyseur de surface d'onde, soit par conjugaison optique à travers des composants de l'analyseur. Grâce à un tel masque, des portions séparées du détecteur d'image sont dédiées respectivement à des paires de zones d'intérêt qui sont voisines à l'intérieur de l'entrée optique, quelque soit le prolongement de la surface d'onde initiale et de l'intensité lumineuse entre deux zones d'intérêt voisines. Chaque interférogramme ne comprend alors que des motifs d'interférence à deux faisceaux, à l'intérieur d'une portion du détecteur d'image qui peut être séparée de celles des autres interférogrammes. La détermination des écarts de piston et de tilt à partir de ces motifs d'interférence à deux faisceaux est simple, et peut être réalisée facilement et rapidement. En particulier, il n'est pas nécessaire de calculer des transformations de Fourier des interférogrammes. Le masque et le diviseur de rayonnement d'un analyseur de surface d'onde selon l'invention sont formés ensemble par un modulateur spatial d'intensité, ou SLM pour "Spatial Light Modulator" en anglais. Cette configuration est avantageuse par sa simplicité et sa capacité à être adaptée à la demande. Elle est notamment particulièrement adaptée lorsque le diviseur de rayonnement comprend un réseau diffractant.

Dans des modes de réalisation préférés de l'invention, le diviseur de rayonnement peut comprendre un réseau diffractant. En effet, lorsque deux sous-faisceaux sont produits par un réseau diffractant pour des ordres de diffraction différents, les photons dans chaque sous-faisceau en régime d'éclairement par impulsions, sont contenus dans une tranche spatiale de progression par propagation, qui est parallèle au réseau diffractant. Pour une même impulsion d'éclairement, les tranches spatiales de tous les sous-faisceaux sont alors alignées les unes avec les autres, parallèlement au réseau diffractant. Une zone de recouvrement dans laquelle est produite l'interférence entre deux des sous-faisceaux, peut alors être plus grande. Il en résulte une précision qui peut être supérieure, pour les valeurs des écarts de piston et de tilt qui sont déduites des figures d'interférence.

Plus particulièrement, l'analyseur de front d'onde peut être agencé de sorte que les sous-faisceaux qui sont produits par le réseau diffractant pour chaque faisceau, correspondent aux valeurs +1 et -1 pour un ou plusieurs numéros d'ordre de diffraction. Le masque occulte alors les sous-faisceaux qui proviennent des zones d'intérêt avec des valeurs qui sont nulles pour tous les numéros d'ordre de diffraction.

Avantageusement, le masque et le détecteur d'image peuvent être conjugués optiquement. Dans ce cas, les portions séparées du détecteur d'image dans lesquelles sont produites les interférences, correspondent à des paires d'ouvertures du masque. Les images des deux ouvertures d'une même paire sont superposées l'une à l'autre sur le détecteur d'image par le diviseur de rayonnement.

Selon un perfectionnement de l'invention, l'analyseur de surface d'onde peut comprendre en outre un système optique afocal qui est disposé sur un trajet du rayonnement entre l'entrée optique et le détecteur d'image, de façon à transformer, vis-à-vis des figures d'interférence qui sont acquises par le détecteur d'image, la surface d'onde initiale par une homothétie d'espace effective à l'intérieur de l'entrée optique. Le choix du grossissement du système afocal permet alors d'ajuster séparément la sensibilité à l'écart de tilt entre des zones d'intérêt voisines, par rapport à la sensibilité à l'écart de piston.

Par exemple, le masque peut être adapté pour sélectionner les zones d'intérêt selon un réseau hexagonal de répartition de ces zones d'intérêt à l'intérieur de l'entrée optique. Alors, le réseau diffractant qui forme le diviseur de rayonnement est bidimensionnel à motif hexagonal, et est orienté de sorte que des axes de symétrie du réseau diffractant soient à 90° d'axes de symétrie du masque, autour d'un axe optique de l'analyseur de surface d'onde. Une telle configuration hexagonale est adaptée à la forme des segments de miroir d'un télescope de type Keck, ainsi qu'à une disposition compacte de sources laser fibrées.

Préférablement, le masque peut être tel que deux zones d'intérêt quelconques qui sont voisines ont une même forme et une même taille, et sont séparées par une zone occultante du masque qui est située entre ces deux zones d'intérêt voisines, et cette zone occultante est assez grande pour contenir une forme qui est identique à celle de chacune des deux zones d'intérêt voisines, et qui a la taille de celles-ci. Alors la portion de surface du détecteur dans laquelle est formée la figure d'interférence qui correspond aux deux zones d'intérêt, est entourée par un anneau d'éclairement nul. Autrement dit, les portions de la surface du détecteur qui sont occupées par les interférogrammes sont séparées les unes des autres, sans recouvrements, ce qui facilite une détection et une analyse automatiques de chaque interférogramme dans l'image entière qui est acquise par le détecteur.

Grâce à l'invention, la détermination des valeurs d'écarts de piston et de tilt est simple et peut être effectuée de façon rapide et économique. Par exemple, le module de traitement peut comprendre une bibliothèque de figures de référence enregistrées, qui sont constituées chacune de franges d'interférence rectilignes et parallèles, chaque figure de référence étant associée à une valeur d'écart de piston et à une valeur d'écart de tilt. Les valeurs d'écart de piston et de tilt qui existent entre deux zones d'intérêt voisines sont alors déduites en recherchant une coïncidence maximale entre la figure d'interférence correspondant à ces deux zones d'intérêt, et une des figures de référence enregistrées. Une telle recherche de coïncidence maximale peut comprendre d'appliquer une correction d'échelle d'éclairement, ou d'intensité lumineuse, à la figure d'interférence et/ou à chaque figure de référence. Un score de coïncidence est ensuite évalué et comparé aux valeurs de score qui sont obtenues pour la même figure d'interférence mais en la comparant à d'autres des figures de référence de la bibliothèque.

De façon générale, le module de traitement peut être adapté pour déduire une valeur pour l'écart de piston qui existe entre deux zones d'intérêt voisines, à partir d'un décalage transversal de franges qui existe dans la figure d'interférence correspondant à ces deux zones d'intérêt. En outre, la valeur de l'écart de tilt qui existe entre les deux zones d'intérêt peut être déduite à partir d'un pas d'interfrange qui existe dans la figure d'interférence.

Par ailleurs, un analyseur de surface d'onde conforme à l'invention peut comprendre en outre un système de séparation spectrale qui est adapté pour séparer l'une de l'autre au moins deux composantes spectrales du rayonnement lumineux reçu par l'entrée optique. L'analyseur de surface d'onde est alors adapté pour acquérir séparément pour chaque composante spectrale, les figures d'interférence qui sont produites par les sous-faisceaux superposés, et pour déterminer les écarts de piston et de tilt pour chaque composante spectrale, à partir des figures d'interférence qui ont été acquises pour cette composante spectrale. Par exemple, le système de séparation spectrale peut être du type à séparation spatiale, pour diriger les composantes spectrales vers des voies optiques respectives de l'analyseur de surface d'onde qui sont séparées. Alternativement, le système de séparation spectrale peut être à décalage temporel variable en fonction de la longueur d'onde, et les figures d'interférence qui sont formées par des composantes spectrales différentes sont acquises à des instants différents.

Un second aspect de l'invention propose d'utiliser un analyseur de surface d'onde qui est conforme au premier aspect, pour déterminer des écarts de piston et de tilt qui existent entre des surfaces d'onde individuelles de faisceaux lumineux susceptibles de produire des interférences. Un procédé de l'invention comprend dans ce but :
- fournir l'analyseur de surface d'onde par interférence ;
- diriger chaque faisceau lumineux sur une zone d'intérêt différente, en utilisant des zones d'intérêt qui sont voisines dans l'entrée optique de l'analyseur de surface d'onde ; et
- activer le détecteur d'image et le module de traitement pour déterminer les écarts de piston et de tilt qui existent entre des surfaces d'onde individuelles dont les faisceaux lumineux ont été dirigés sur des zones d'intérêt voisines.

Grâce à l'invention, les écarts de piston et de tilt qui existent entre les faisceaux lumineux peuvent être déterminés sans utiliser aucune onde de référence additionnelle. Le procédé est donc simple à mettre en oeuvre pour cette raison, sans nécessiter de composants optiques qui soient dédiés à la génération et l'introduction d'une telle onde de référence.

Un tel procédé peut être utilisé pour ajuster les segments d'un miroir de télescope de type Keck. Dans ce cas, les faisceaux lumineux sont produits par une source de rayonnement qui est agencée pour que le rayonnement soit réfléchi simultanément par les segments juxtaposés du miroir. Pour chaque segment du miroir, une partie du rayonnement qui est réfléchie par ce segment forme alors le faisceau lumineux qui est dirigé sur l'une des zones d'intérêt de l'entrée optique. Pour cette application, le procédé comprend en outre de calculer des écarts de hauteur et des écarts d'inclinaison qui existent entre deux segments voisins du miroir. Ces écarts de hauteur et d'inclinaison sont calculés à partir des valeurs des écarts de piston et de tilt qui sont déterminées pour les faisceaux lumineux correspondants.

Un procédé conforme au second aspect de l'invention peut aussi être utilisé pour ajuster en phase des faisceaux lumineux qui sont produits respectivement par des sources laser séparées, notamment des sources laser à fibres. Lorsque les sources laser sont du type laser à impulsions, le diviseur de rayonnement comprend avantageusement un réseau diffractant. Pour cette autre application, le procédé comprend en outre de calculer des écarts temporels et des écarts de direction de propagation qui existent entre des impulsions de rayonnement produites par deux sources laser différentes, dont les faisceaux ont été dirigés sur deux zones d'intérêt voisines. Ces écarts temporels et de direction de propagation sont calculés à partir des valeurs des écarts de piston et de tilt qui sont déterminées pour les faisceaux.

D'autres particularités et avantages de la présente invention apparaîtront dans la description ci-après d'exemples de réalisation non limitatifs, en référence aux dessins annexés, dans lesquels :
- la figure 1 est un schéma de principe à une seule dimension d'espace, qui montre la fonction d'un masque introduit par la présente invention ;
- les figures 2a et 2b représentent respectivement un masque et une image correspondante telle que produite par un analyseur de surface d'onde conforme à l'invention ;
- la figure 3 est un schéma optique d'un analyseur de surface d'onde non couvert par les revendications qui est utilisé pour ajuster en phase des faisceaux lumineux produits par plusieurs sources laser ; et
- les figures 4a et 4b sont des schémas optiques respectifs de deux autres analyseurs de surface d'onde qui sont utilisés pour ajuster des segments de miroir d'un télescope de type Keck.

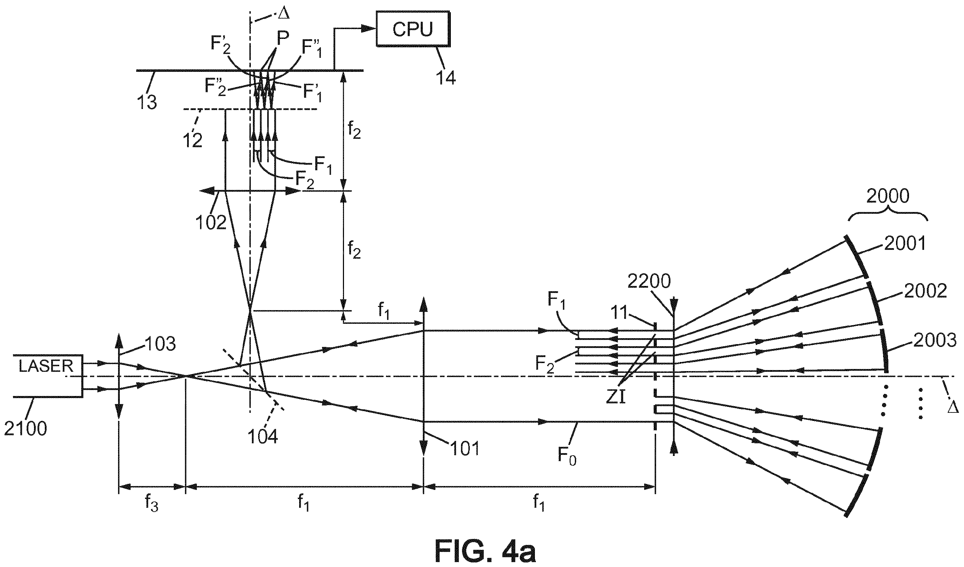

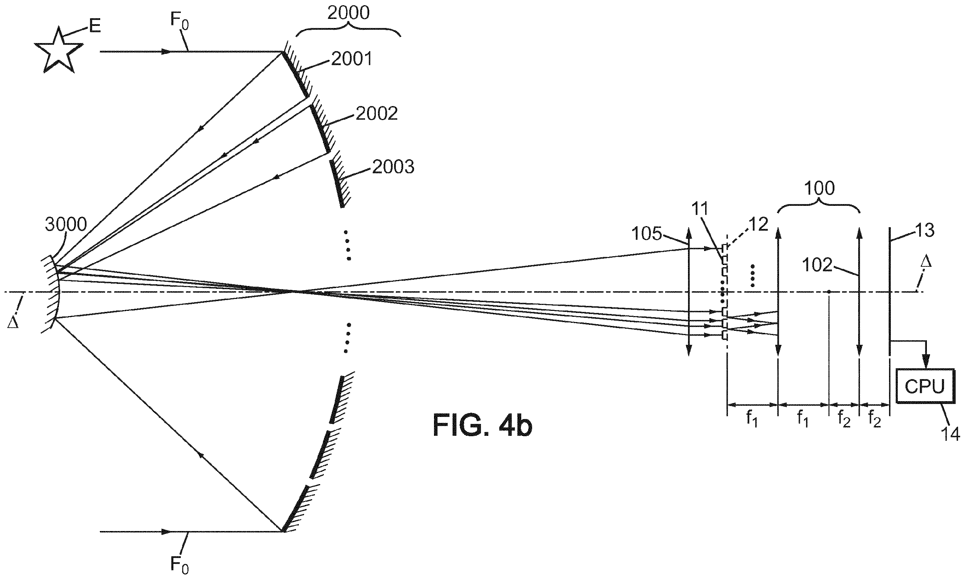

La figure 4a représente un analyseur non couvert par les revendications, tandis que la figure 4b représente un analyseur conforme à l'invention. Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

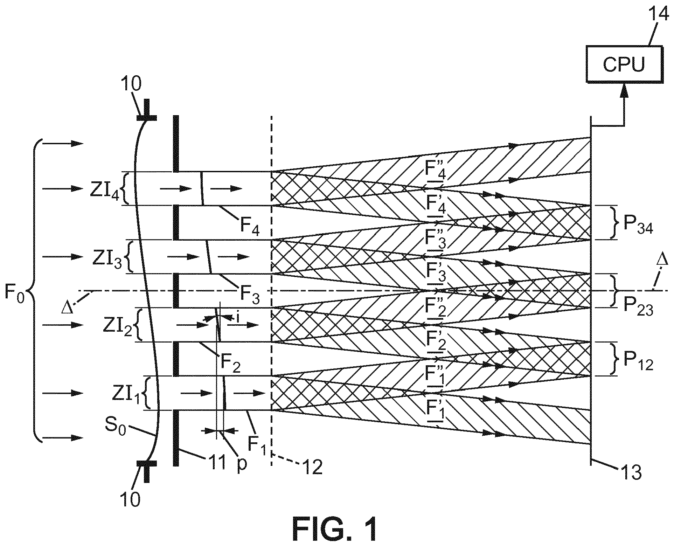

Dans la figure 1, les références indiquées ont les significations suivantes :
- Δ: axe optique de l'analyseur de surface d'onde
- 10: entrée optique de l'analyseur de surface d'onde
- 11: masque à ouvertures séparées
- 12: réseau diffractant
- 13: surface d'un détecteur d'image
- 14: module de traitement, noté CPU
- F₀: faisceau lumineux initial
- F₁,..., F₄: faisceaux sélectionnés à l'intérieur du faisceau initial F₀
- F'₁, F"₁: sous-faisceaux issus du faisceau F₁
- F'₂, F"₂: sous-faisceaux issus du faisceau F₂
- F'₃, F"₃: sous-faisceaux issus du faisceau F₃
- F'₄, F"₄: sous-faisceaux issus du faisceau F₂
- S₀: surface d'onde initiale
- ZI₁,..., ZI₄: zones d'intérêt
- P₁₂, P₂₃, P₃₄: portions de la surface du détecteur d'image
- p: piston existant dans une zone de la surface d'onde initiale S₀
- i: tilt existant dans une zone de la surface d'onde initiale S₀

L'entrée optique 10, le masque 11, le réseau diffractant 12 et le détecteur d'image 13 sont disposés perpendiculairement à l'axe optique Δ. Le masque 11 est disposé dans l'entrée optique 10, ou derrière celle-ci le long de l'axe optique Δ. Les ouvertures du masque 11, qui sont séparées les unes des autres, déterminent une pluralité de zones dans l'entrée optique 10, appelées zones d'intérêt et notées ZI₁,..., ZI₄. Dans un premier temps, on peut supposer que le faisceau initial F₀ est monochromatique et se propage sensiblement parallèlement à l'axe optique Δ. Sa surface d'onde initiale S₀ à travers l'entrée optique 10, peut présenter une forme sensiblement quelconque, avec des variations de piston parallèlement à l'axe optique Δ, et des variations de tilt par rapport à un plan qui est perpendiculaire à l'axe optique Δ. Les ouvertures du masque 11 ne laissent donc passer que des faisceaux séparés F₁,..., F₄ qui sont issus du faisceau initial F₀. Les faisceaux F₁,..., F₄ reproduisent des portions de la surface d'onde initiale S₀, telles que contenues respectivement dans les ouvertures du masque 11.

Dans le cas simple à une seule dimension de la figure 1, le réseau diffractant 12 produit à partir de chacun des faisceaux F₁,..., F₄, deux sous-faisceaux qui sont déviés symétriquement, et qui correspondent respectivement aux valeurs +1 et -1 d'un numéro d'ordre de diffraction. Sur la figure 1, les sous-faisceaux qui sont hachurés dans un sens correspondent à l'ordre de diffraction +1, et ceux hachurés dans l'autre sens correspondent à l'ordre de diffraction -1. Selon l'invention, la surface du détecteur d'image 13, appelée simplement détecteur d'image 13 dans la suite, est située de façon à recevoir dans des mêmes portions de celle-ci, à la fois un sous-faisceau d'ordre de diffraction +1 et un autre sous-faisceau d'ordre de diffraction -1, qui sont issus de deux faisceaux déterminés par des ouvertures voisines du masque 11. Ainsi, la portion P₁₂ du détecteur d'image 13 reçoit en superposition les sous-faisceaux F"₁ et F'₂. De même, la portion de détecteur P₂₃ reçoit en superposition les sous-faisceaux F"₂ et F'₃, et la portion P₃₄ reçoit les sous-faisceaux F"₃ et F'₄. Le masque 11 empêche que les portions de détecteur P₁₂, P₂₃ et P₃₄ reçoivent les parties du faisceau initial F₀ qui sont intermédiaires entre les zones d'intérêt ZI₁ et ZI₂, ZI₂ et ZI₃, ZI₃ et ZI₄. Les ordres de diffraction supérieurs à +1 ou inférieurs à -1 peuvent être négligés. En pratique, les intensités lumineuses de ces ordres peuvent être fortement réduites ou annulées en choisissant un motif élémentaire adapté pour le réseau diffractant 12. Dans chacune des portions du détecteur 13, les deux sous-faisceaux qui sont superposés produisent une figure d'interférence. En assimilant chaque portion de la surface d'onde initiale S₀ qui est contenue dans l'une des zones d'intérêt ZI₁,..., ZI₄ à une portion de plan possiblement décalée le long de l'axe optique Δ et possiblement inclinée, alors la figure d'interférence dans chaque portion de détecteur P₁₂, P₂₃, P₃₄ est constituée de franges parallèles. Alors, pour un faisceau initial F₀ qui est monochromatique et lorsque l'écart de tilt est nul pour l'une de ces figures d'interférence, le décalage de la frange centrale par rapport à l'intersection des axes optiques des sous-faisceaux est égal à Δp·F/λ, où À est la longueur d'onde, Δp est l'écart de piston absolu qui existe entre les portions de la surface d'onde initiale S₀ dont sont issus les deux sous-faisceaux qui produisent l'interférence dans la portion de détecteur concernée, et F est le pas d'interfrange de la figure d'interférence. Mais dans la pratique, seul l'écart de piston résiduel peut être mesuré à cause de la nature monochromatique du faisceau initial F₀.

Pour les deux sous-faisceaux qui produisent la figure d'interférence dans l'une des portions du détecteur P₁₂, P₂₃, P₃₄, l'écart de tilt Δi est l'angle au sommet du prisme qui est formé par les plans tangents aux deux portions de la surface d'onde initiale S₀ qui sont contenues dans les zones d'intérêt concernées. Cet écart de tilt Δi se combine alors avec l'écart d'inclinaison des sous-faisceaux qui forment l'interférence dans la portion de détecteur. Cette combinaison angulaire n'est simple que lorsque la direction du sommet du prisme d'écart de tilt est perpendiculaire au plan qui contient les directions de propagation des deux sous-faisceaux. La combinaison est alors une addition d'angles, et la variation de la fréquence spatiale des franges d'interférence, mesurée selon la trace sur la surface du détecteur, du plan qui contient les directions de propagation des sous-faisceaux, est alors égale à l'écart de tilt Δi divisé par la longueur d'onde. Dans le cas d'une orientation quelconque de la direction du sommet du prisme d'écart de tilt par rapport au plan des directions de propagation des deux sous-faisceaux, l'Homme du métier utilisera les formules mathématiques données dans la thèse de B. Toulon mentionnée plus haut. Ainsi, les écarts de tilt et leurs orientations peuvent être déduits des figures d'interférence à deux ondes qui sont acquises par le détecteur d'image. L'ensemble des figures d'interférence fournit en outre une redondance qui peut être utilisée pour accroître la précision avec laquelle les écarts de piston, les écarts de tilt et les orientations des écarts de tilt sont déterminés.

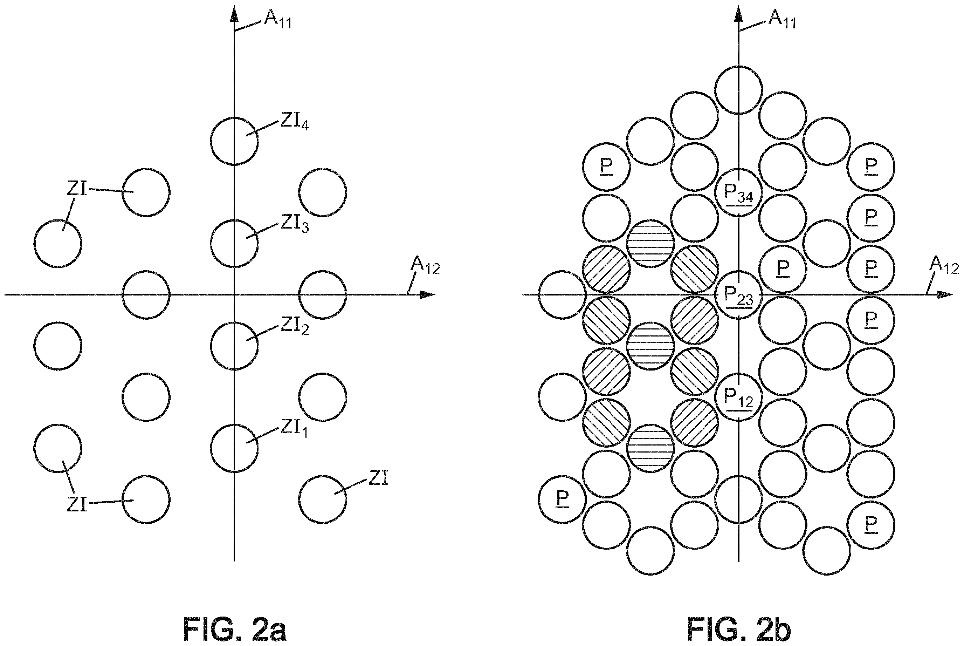

Les figures 2a et 2b montrent une mise en oeuvre à deux dimensions du fonctionnement de l'invention qui vient d'être décrit. La figure 2a est une vue de face du masque 11, avec les zones d'intérêt autres que Z₁,..., Z₄ qui sont notées de façon générique ZI. Les zones d'intérêt ZI sont donc déterminées par des ouvertures ménagées dans une plaque opaque qui forme le masque 11. Lorsque le masque 11 est situé dans l'entrée optique 10, les zones d'intérêt sont confondues avec les ouvertures du masque. Deux zones d'intérêt ZI qui sont voisines sont séparées l'une de l'autre par un segment intermédiaire du masque qui est opaque. Ce segment intermédiaire possède une largeur qui est au moins égale à la taille de chacune des deux zones d'intérêt voisines. D'une façon qui est préférée, les zones d'intérêt ZI sont réparties selon un réseau hexagonal régulier, dont A₁₁ est l'un des axes de symétrie, ou axes d'alignement principal des zones d'intérêt dans la symétrie d'ordre six du masque 11. Les zones d'intérêt ZI peuvent être circulaires, avec une taille de zone qui est suffisante pour que la diffraction lumineuse qui est produite par ces zones d'intérêt soit négligeable. Par exemple, les zones d'intérêt ZI peuvent avoir chacune un diamètre de 50 µm (micromètre), et des centres géométriques de deux zones d'intérêt voisines peuvent être distants de 110 µm. Dans ce cas, le réseau diffractant 12 est aussi hexagonal régulier, mais avec un de ses axes de symétrie A₁₂ qui est perpendiculaire à l'axe A₁₁, lorsque les deux axes A₁₁ et A₁₂ sont projetés dans un même plan perpendiculaire à l'axe optique Δ.

La figure 2b montre l'image complète qui est acquise par le détecteur 13 pour le masque 11 de la figure 2a, avec les portions de la surface du détecteur qui sont dédiées séparément aux paires de zones d'intérêt ZI voisines. Ces portions de la surface du détecteur 13 sont désignées génériquement par P, en plus des portions P₁₂, P₂₃ et P₃₄ qui ont été présentées individuellement en référence avec la figure 1. Pour certaines des portions P, les figures d'interférence formées de franges parallèles ont aussi été représentées à titre d'illustration. Evidemment, des figures d'interférence analogues sont présentes dans toutes les portions P. Des interférences parasites à plus de deux ondes, ainsi que des variations de tilt de la surface d'onde initiale S₀ à l'intérieur de chaque zone d'intérêt ZI, peuvent être négligées.

L'analyse de l'image qui est acquise par le détecteur 13 peut débuter par une détection automatique des portions P qui contiennent les interférogrammes. Une telle détection automatique est facilitée par le fait que les portions P sont disjointes, c'est-à-dire sans recouvrement entre portions voisines et avec des segments intermédiaires qui ne reçoivent aucun flux lumineux entre deux portions P voisines. La détection automatique des portions P est aussi facilitée par une connaissance préalable des positions et des formes des portions P dans la surface du détecteur 13.

Le traitement individuel de chaque interférogramme peut être effectué de multiples façons, pour obtenir les valeurs d'écarts de piston et de tilt. Une méthode qui est particulièrement rapide et qui nécessite peu de puissance de calcul, consiste à comparer chaque interférogramme contenu dans une portion P à des figures d'interférence à deux ondes planes qui ont été enregistrées initialement, et pour lesquelles les valeurs des écarts de piston et de tilt sont connues. Une telle méthode procède donc par comparaison de contenus d'images, et est très efficace pour des images qui sont formées de franges parallèles. En outre une telle méthode est robuste par rapport à la présence éventuelle d'artéfacts dans les images, tels que des interférences parasites à plus de deux ondes, des variations du tilt à l'intérieur de chaque zone d'intérêt, et des effets de diffraction parasites. De façon connue, les méthodes de comparaison d'images comprennent souvent une étape initiale lors de laquelle les valeurs moyennes et les écart-types des éclairements des images sont ramenés à des valeurs identiques pour les deux images qui sont en cours de comparaison. Pour cela, une transformation affine d'échelle peut être appliquée aux valeurs d'éclairement de l'une au moins des deux images qui sont comparées. Puis un score de coïncidence est calculé pour les deux images. Une bibliothèque de figures d'interférence à deux ondes est donc fournie initialement, qui est indexée par des valeurs d'écart de piston et d'écart de tilt, et possiblement aussi par une valeur d'orientation angulaire de l'écart de tilt. De telles figures d'interférence préenregistrées ont été appelées figures de référence dans la description générale de l'invention. Pour chaque interférogramme de l'image complète qui est acquise par le détecteur 13, les valeurs d'écarts de piston et de tilt, et éventuellement aussi l'orientation angulaire de l'écart de tilt, sont donc celles de la figure de référence contenue dans la bibliothèque, pour laquelle le score de coïncidence est le plus élevé. Alternativement, l'orientation angulaire de l'écart de tilt peut être déduite de la comparaison de chaque interférogramme avec chaque figure de référence lorsqu'une rotation variable est appliquée à l'interférogramme ou à la figure de référence.

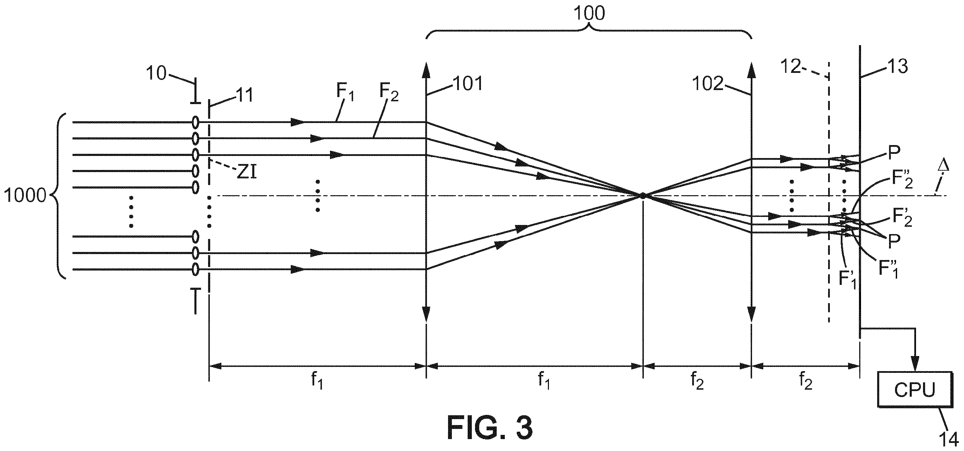

La figure 3 montre une utilisation d'un analyseur de surface d'onde non couvert par les revendications, pour réaliser une combinaison cohérente de faisceaux lumineux qui sont produits par un ensemble de sources laser fibrées 1000. Les sources laser 1000 sont capables d'interférer entre elles, et disposées en parallèle de façon que les sections de sortie des fibres optiques soient sensiblement toutes disposées dans un même plan perpendiculaire à l'axe optique Δ. Chaque fibre optique est munie d'une lentille de sortie, pour que le faisceau lumineux qui est issu de cette fibre optique soit collimaté. Le nombre des fibres optiques qui produisent ainsi des faisceaux laser individuels n'est pas limité, et peut être par exemple de l'ordre de plusieurs centaines de milliers. Tous les faisceaux individuels des sources laser 1000 sont amenés dans l'entrée optique 10, sensiblement parallèlement à l'axe optique Δ. Le masque 11 possède au moins autant d'ouvertures que le nombre des sources laser 1000. Une seule fibre optique est ainsi dirigée dans une ouverture du masque 11 qui lui est dédiée, et il est avantageux d'utiliser des ouvertures qui sont voisines et regroupées autant que possible. La répartition transversale des fibres optiques peut être selon un réseau hexagonal, de sorte qu'un masque 11 et un réseau 12 tels que décrits en référence aux figures 2a et 2b peuvent être utilisés. Ainsi, les faisceaux laser qui sont issus des fibres optiques correspondent individuellement aux faisceaux lumineux F₁,..., F₄,... qui ont été introduits précédemment. Les références 101 et 102 désignent deux lentilles convergentes, avec leurs distances focales respectives notées f₁ et f₂. Elles sont disposées pour former ensemble un système optique afocal qui est désigné par la référence 100. Autrement dit, le foyer image de la lentille 101 est superposé au foyer objet de la lentille 102. Les deux lentilles 101 et 102 ont des extensions transversales suffisantes pour contenir tous les faisceaux issus des fibres optiques. En outre, la surface du détecteur d'image 13 est placée le long de l'axe optique Δ pour être conjuguée optiquement avec le masque 11 à travers les deux lentilles 101 et 102. Par exemple, le masque 11 peut être situé au niveau du foyer objet de la lentille 101, et la surface du détecteur d'image 13 peut être située au niveau du foyer image de la lentille 102. Le réseau diffractant 12 peut être inséré entre la lentille 102 et la surface du détecteur d'image 13. Sa position exacte le long de l'axe optique Δ est ajustée pour que les portions P du détecteur 13 soient chacune la superposition des images de deux ouvertures voisines du masque 11. Dans une telle configuration de l'analyseur de surface d'onde, les portions P forment un réseau hexagonal lacunaire, dont les lacunes correspondent une-à-une aux emplacements qu'auraient les images des ouvertures du masque 11 en l'absence du réseau 12. Les figures 2a et 2b montrent une telle correspondance. Un tel analyseur de surface d'onde permet donc de déterminer les écarts de piston et les écarts d'inclinaison qui sont présents entre fibres optiques voisines, lorsque toutes les sources laser fibrées 1000 sont monochromatiques avec une même longueur d'onde commune.

En outre, le grossissement du système optique afocal 100 permet d'ajuster la sensibilité de l'analyseur de surface d'onde par rapport aux écarts de tilt, sans modifier sa sensibilité aux écarts de piston. Cette variation de la sensibilité aux écarts de tilt résulte du théorème de Gouy. Le choix d'une faible valeur pour le grossissement du système optique afocal 100, notamment une valeur de grossissement inférieure à l'unité, permet d'obtenir un analyseur de surface d'onde qui est mieux adapté pour mesurer précisément des écarts de tilt.

Un cas particulier de la mise en oeuvre de la figure 3 est celui où les sources laser 1000 sont du type impulsionnel, chacune pour délivrer une impulsion de rayonnement très courte, par exemple de l'ordre d'une picoseconde ou moins. On suppose que les écarts de tilt qui peuvent exister entre des impulsions qui sont issues de sources laser différentes, ont été compensés ou corrigés par ailleurs. Grâce au fait que le pas d'interfrange soit indépendant de la longueur d'onde pour une mise en oeuvre qui utilise un réseau diffractant, chaque figure d'interférence à l'intérieur d'une des portions P du détecteur 13 est encore formée de franges qui sont séparées conformément à un pas d'interfrange défini. Pour chaque longueur d'onde d'analyse, l'écart de piston résiduel peut être déduit du décalage latéral de la frange centrale de la figure d'interférence correspondante. Mais le but d'une telle application à un régime impulsionnel est en fait de rechercher les écarts de piston absolus qui existent entre les impulsions qui sont issues de sources différentes, mesurés selon la direction de propagation commune des impulsions. Pour deux impulsions qui sont issues de sources voisines, l'écart de piston absolu qui existe entre celles-ci est égal à l'écart de piston résiduel déterminé pour chaque longueur d'onde qui est utilisée pour la détection, plus un nombre entier de fois cette longueur d'onde de détection. Une telle indétermination peut être levée en mesurant l'écart de piston simultanément pour au moins deux longueurs d'onde différentes. Des écarts de piston absolus peuvent ainsi être déterminés, entre deux impulsions issues de sources laser voisines, qui sont d'autant plus grands que les longueurs d'onde qui sont utilisées pour former les figures d'interférence, sont proches les unes des autres. L'utilisation de deux intervalles spectraux qui sont très restreints autour de deux longueurs d'onde différentes, est suffisante dans la plupart des cas.

De telles mesures à plusieurs longueurs d'onde peuvent être obtenues par des filtrages spectraux appropriés, pour sélectionner des composantes du rayonnement qui correspondent à des intervalles spectraux différents, et en dirigeant chaque composante du rayonnement filtrée vers une voie séparée de l'analyseur de surface d'onde. Une méthode alternative peut consister à étaler chaque impulsion sur une durée rallongée, en créant des décalages temporels qui varient en fonction de la fréquence des composantes spectrales qui constituent l'impulsion. De telles méthodes d'étalement spectro-temporel sont connues de l'Homme du métier. Des analyses de surface d'onde conformes à l'invention peuvent alors être effectuées à des longueurs d'onde différentes, lorsqu'elles sont réalisées à des instants différents à l'intérieur de la durée rallongée de l'impulsion étalée. Pour cela, plusieurs voies séparées d'analyseur de front d'onde peuvent encore être prévues en parallèle, et activées à des instants différents.

Les figures 4a et 4b montrent une autre utilisation d'un analyseur de surface d'onde pour mesurer des écarts de hauteur et d'inclinaison qui peuvent être présents entre des segments voisins d'un miroir de télescope de type Keck. En fonction des écarts qui seront mesurés ainsi, les positions relatives des segments du miroir pourront être réajustées, afin qu'une surface d'onde produite par réflexion sur le miroir complet soit dépourvue de marches ou de ruptures brutales de pente.

Dans la figure 4a, les références 101 et 102 désignent encore deux lentilles convergentes qui forment un premier système optique afocal. Simultanément, la lentille 101 forme un second système optique afocal avec une lentille convergente d'illumination 103, dont la distance focale est notée f₃. Une lame semi-réfléchissante 104 permet de coupler une voie d'illumination et une voie de sortie, à une même voie de test optique. La voie d'illumination comprend une source laser 2100 et la lentille 103. Le faisceau d'illumination F₀ qui est produit par la source 2100 est dirigé dans la voie de test optique à travers la lame semi-réfléchissante 104. La voie de test optique comprend la lentille 101, le masque 11, une lentille divergente 2200, et le miroir à tester qui est désigné par la référence 2000. Le miroir 2000 est constitué par tous les segments de miroir juxtaposés 2001, 2002, 2003,... Ces segments de miroir sont juxtaposés selon un réseau hexagonal, pour utiliser un masque et un réseau diffractant tels que décrits plus haut. La lentille divergente 2200 est sélectionnée et placée par rapport au miroir 2000 de façon à produire en combinaison avec lui une fonction optique équivalente à un miroir plan, lorsque les éventuels défauts de positions relatives des segments individuels 2001, 2002, 2003... ne sont pas pris en compte. Le but de la présente configuration consiste à déterminer ces défauts de positions relatives. En fonction du miroir 2000, la lentille divergente 2200 peut être partiellement cylindrique. La voie de sortie comprend la lentille 102, le réseau diffractant 12 et le détecteur d'image 13.

Dans l'analyseur de surface d'onde de la figure 4a, le masque 11 est situé entre la lentille 101 et la lentille 2200. Il est conçu pour présenter des ouvertures qui sélectionnent des faisceaux lumineux F₁, F₂,... provenant de zones centrales respectives des segments de miroir 2001, 2002, 2003,..., et pour occulter des parties du faisceau d'illumination F₀ qui éclaireraient des espaces de séparation présents entre segments voisins du miroir 2000. En fait, pour un tel analyseur de surface d'onde, on peut considérer que l'entrée optique 10 est située au niveau du masque 11, pour les parties du faisceau F₀ qui sont réfléchies par tous les segments de miroir, et qui se propagent de la droite vers la gauche de la figure 4a. La voie de test optique et la voie de sortie constituent alors ensemble une structure d'analyseur de surface d'onde qui est analogue à celle représentée sur la figure 3.

La mesure du pas d'interfrange pour l'interférogramme qui est contenu dans chaque portion P du détecteur 13, fournit l'écart de tilt entre les faisceaux lumineux correspondants F₁, F₂,..., et par suite fournit l'écart d'inclinaison qui existe entre les segments de miroir correspondants 2001, 2002,..., par paires de segments de miroir voisins. Lorsque la source 2100 est monochromatique, la position de la frange centrale de chaque interférogramme permet de déterminer l'écart de piston résiduel qui existe entre les faisceaux lumineux réfléchis par deux segments de miroirs voisins. L'utilisation d'au moins deux longueurs d'onde différentes permet encore d'obtenir les écarts de piston absolus, et par suite de déterminer les écarts de hauteur qui existent entre tous les segments du miroir 2000, par paires de segments de miroir voisins.

Le schéma de la figure 4b est une variante de celui de la figure 4a, pour obtenir une application de l'invention qui puisse être mise en oeuvre sur le lieu d'installation d'un télescope de type Keck. La référence 2000 désigne le miroir primaire du télescope de type Keck, avec les segments de miroir 2001, 2002, 2003... La référence 3000 désigne le miroir secondaire du télescope, dans le cas pris pour exemple d'un télescope à deux miroirs. La lentille 105 possède une fonction de collimation, et forme l'entrée optique de l'analyseur de surface d'onde. Dans cette variante de l'analyseur de surface d'onde, le masque 11 et le réseau diffractant 12 sont accolés, et conjugués optiquement avec le détecteur d'image 13 à travers le système afocal 100. Ils sont en outre conjugués optiquement avec le miroir 2000. Le rayonnement qui est utilisé pour caractériser les écarts de hauteur et d'inclinaison des segments de miroir 2001, 2002, 2003... peut alors être directement le faisceau de lumière F₀ qui provient d'une étoile E et qui atteint le miroir primaire 2000. Le masque 11 est encore conçu pour occulter des portions du faisceau F₀ qui parviennent au niveau du miroir primaire 2000 dans les intervalles intermédiaires entre segments de miroir voisins, et dans des parties périphériques des segments de miroir.

Il est entendu que l'invention peut être reproduite en modifiant de nombreux détails de réalisation par rapport à la description ci-dessus, tout en conservant certains au moins des avantages qui ont été cités. Parmi les modifications possibles, les suivantes sont citées de façon non-limitative :
- le diviseur de rayonnement peut être constitué de miroirs, à la place du réseau diffractant ;
- le réseau de répartition des zones d'intérêt qui est défini par le masque, peut être carré ou autre, au lieu d'être hexagonal. Le motif du réseau diffractant doit être adapté en conséquence ;
- par équivalence optique, l'ordre des composants optiques qui constituent l'analyseur de surface d'onde, peut être modifié. En particulier, le masque, le réseau et le système optique afocal peuvent être disposés dans des ordres différents en suivant le sens de propagation du rayonnement à l'intérieur de l'analyseur de surface d'onde ;
- le système optique afocal peut avoir une structure différente de celle à deux lentilles convergentes qui a été décrite ;
- par effet de profondeur de champ, le masque peut être décalé dans une grande mesure le long de l'axe optique de l'analyseur de surface d'onde, tout en conservant un effet qui reste quasiment identique dans l'image qui est acquise ; et
- un analyseur de surface d'onde qui est conforme à l'invention peut être utilisé pour de nombreuses applications, autres que celles qui ont été décrites.

## Revendications

1. Analyseur de surface d'onde par interférence, comprenant :
- une entrée optique (10), destinée à recevoir un rayonnement lumineux possédant une surface d'onde initiale (S₀) qui s'étend à travers ladite entrée optique ;
- un diviseur de rayonnement, disposé pour produire, à partir de faisceaux lumineux (F₁, F₂) qui proviennent respectivement de zones réduites à l'intérieur de l'entrée optique (10), au moins deux sous-faisceaux (F'₁, F"₁, F'₂, F"₂) pour chaque faisceau lumineux, chaque sous-faisceau reproduisant des caractéristiques de la surface d'onde initiale (S₀) existant dans la zone réduite correspondante ;
- des chemins optiques, agencés pour superposer deux sous-faisceaux (F"₁, F'₂) qui sont issus respectivement de deux zones réduites différentes à l'intérieur de l'entrée optique (10), et qui passent chacun par un chemin optique différent ;
- au moins un détecteur d'image (13), disposé pour acquérir des figures d'interférence qui sont produites par les sous-faisceaux (F"₁, F'₂) superposés ;
- un module de traitement (14), adapté pour déterminer, à partir des figures d'interférence, des écarts de piston (p) et de tilt (i) existant pour la surface d'onde initiale (S₀) entre les zones réduites dont proviennent les sous-faisceaux superposés ; et
- un masque (11) adapté pour sélectionner, au moyen d'ouvertures dudit masque, des zones d'intérêt (ZI) disjointes à l'intérieur de l'entrée optique (10) en tant que zones réduites, en occultant au moins en partie la surface d'onde initiale (S₀) en dehors desdites zones d'intérêt, ou en occultant au moins en partie des faisceaux lumineux qui ne proviennent pas desdites zones d'intérêt, de sorte que des portions (P) séparées du détecteur d'image (13) sont dédiées respectivement à des paires de zones d'intérêt qui sont voisines à l'intérieur de l'entrée optique,
caractérisé en ce le masque (11) et le diviseur de rayonnement sont formés ensemble par un modulateur spatial d'intensité.

2. Analyseur de surface d'onde selon la revendication 1, dans lequel le diviseur de rayonnement comprend un réseau diffractant (12).

3. Analyseur de surface d'onde selon la revendication 2, agencé de sorte que les sous-faisceaux (F'₁, F"₁, F'₂, F"₂) qui sont produits par le réseau diffractant (12) pour chaque faisceau (F₁, F₂), correspondent aux valeurs +1 et -1 pour un ou plusieurs numéros d'ordre de diffraction.

4. Analyseur de surface d'onde selon l'une quelconque des revendications précédentes, dans lequel le masque (11) et le détecteur d'image (13) sont conjugués optiquement.

5. Analyseur de surface d'onde selon l'une quelconque des revendications précédentes, comprenant en outre un système optique afocal (100) disposé sur un trajet du rayonnement entre l'entrée optique (10) et le détecteur d'image (13), de façon à transformer, vis-à-vis des figures d'interférence qui sont acquises par le détecteur d'image, la surface d'onde initiale (S₀) par une homothétie d'espace effective à l'intérieur de l'entrée optique.

6. Analyseur de surface d'onde selon l'une quelconque des revendications précédentes dont la revendication 2, dans lequel le masque (11) est adapté pour sélectionner les zones d'intérêt (ZI) selon un réseau hexagonal de répartition des dites zones d'intérêt à l'intérieur de l'entrée optique (10), et le réseau diffractant (12) est bidimensionnel à motif hexagonal, et orienté de sorte que des axes de symétrie du réseau diffractant soient à 90° d'axes de symétrie du masque, autour d'un axe optique (Δ) de l'analyseur de surface d'onde.

7. Analyseur de surface d'onde selon l'une quelconque des revendications précédentes, dans lequel le masque (11) est tel que deux quelconques des zones d'intérêt (ZI) qui sont voisines ont une même forme et une même taille, et sont séparées par une zone occultante dudit masque qui est située entre lesdites deux zones d'intérêt voisines, ladite zone occultante étant assez grande pour contenir une forme qui est identique à celle de chacune des deux zones d'intérêt voisines, et qui a la taille des dites deux zones d'intérêt voisines.

8. Analyseur de surface d'onde selon l'une quelconque des revendications précédentes, dans lequel le module de traitement (14) comprend une bibliothèque de figures de référence enregistrées, qui sont constituées chacune de franges d'interférence rectilignes et parallèles, chaque figure de référence étant associée à une valeur d'écart de piston et à une valeur d'écart de tilt,
et dans lequel des valeurs d'écart de piston et de tilt existant entre deux zones d'intérêt (ZI) voisines sont déduites en recherchant une coïncidence maximale entre la figure d'interférence correspondant aux dites deux zones d'intérêt, et une des figures de référence enregistrées.

9. Analyseur de surface d'onde selon l'une quelconque des revendications précédentes, dans lequel le module de traitement (14) est adapté pour déduire une valeur pour l'écart de piston (p) existant entre deux zones d'intérêt (ZI) voisines, à partir d'un décalage transversal de franges existant dans la figure d'interférence correspondant aux dites deux zones d'intérêt, et
pour déduire une valeur pour l'écart de tilt (i) existant entre deux zones d'intérêt (ZI) voisines, à partir d'un pas d'interfrange existant dans ladite figure d'interférence correspondant aux deux zones d'intérêt.

10. Analyseur de surface d'onde selon l'une quelconque des revendications précédentes, comprenant en outre :
- un système de séparation spectrale, adapté pour séparer l'une de l'autre au moins deux composantes spectrales du rayonnement lumineux reçu par l'entrée optique (10),
et l'analyseur de surface d'onde étant adapté pour acquérir séparément pour chaque composante spectrale, les figures d'interférence qui sont produites par les sous-faisceaux (F"₁, F'₂) superposés, et pour déterminer les écarts de piston (p) et de tilt (i) pour chaque composante spectrale, à partir des figures d'interférence acquises pour ladite composante spectrale.

11. Procédé pour déterminer des écarts de piston (p) et de tilt (i) entre des surfaces d'onde individuelles de faisceaux lumineux (F₁, F₂) susceptibles de produire des interférences, **caractérisé en ce qu'**il comprend les étapes suivantes :
- fournir un analyseur de surface d'onde par interférence selon l'une quelconque des revendications 1 à 10 ;
- diriger chaque faisceau lumineux (F₁, F₂) sur une zone d'intérêt (ZI) différente, en utilisant des zones d'intérêt qui sont voisines dans l'entrée optique (10) de l'analyseur de surface d'onde ; et
- activer le détecteur d'image (13) et le module de traitement (14) pour déterminer les écarts de piston (p) et de tilt (i) qui existent entre des surfaces d'onde individuelles dont les faisceaux lumineux (F₁, F₂) ont été dirigés sur des zones d'intérêt (ZI) voisines.

12. Procédé selon la revendication 11, suivant lequel les faisceaux lumineux (F₁, F₂) sont produits par une source de rayonnement (2100) agencée pour que ledit rayonnement soit réfléchi simultanément par des segments (2001, 2002) juxtaposés d'un miroir (2000),
et pour chaque segment (2001, 2002) du miroir, une partie du rayonnement qui est réfléchie par ledit segment du miroir forme le faisceau lumineux (F₁, F₂) qui est dirigé sur l'une des zones d'intérêt (ZI) de l'entrée optique (10),
et le procédé comprend en outre de calculer des écarts de hauteur et des écarts d'inclinaison qui existent entre deux segments (2001, 2002) voisins du miroir, à partir des valeurs des écarts de piston (p) et de tilt (i) qui sont déterminées pour les faisceaux lumineux correspondants.

13. Procédé selon la revendication 11, suivant lequel les faisceaux lumineux (F₁, F₂) sont produits respectivement par des sources laser (1000) séparées, notamment des sources laser à fibres.

14. Procédé selon la revendication 13, suivant lequel les sources laser (1000) sont du type laser à impulsions et l'analyseur de surface d'onde est conforme à la revendication 2,
et le procédé comprend en outre de calculer des écarts temporels et des écarts de direction de propagation qui existent entre des impulsions de rayonnement qui sont produites par deux sources laser différentes, dont les faisceaux (F₁, F₂) ont été dirigés sur deux zones d'intérêt (ZI) voisines, à partir des valeurs des écarts de piston (p) et de tilt (i) qui sont déterminées pour les dits faisceaux.

## Patentansprüche

1. Interferenz-Wellenfrontanalysator, umfassend:
- einen optischen Eingang (10), der dazu bestimmt ist, eine Lichtstrahlung mit einer Ausgangswellenfront (S₀), die sich durch den optischen Eingang erstreckt, zu empfangen;
- einen Strahlungsteiler, der dazu angeordnet ist, anhand von Lichtstrahlen (F₁, F₂), die jeweils von reduzierten Bereichen innerhalb des optischen Eingangs (10) ausgehen, zumindest zwei Teilstrahlen (F'₁, F"₁, F'₂, F"₂) für jeden Lichtstrahl zu erzeugen, wobei jeder Teilstrahl Eigenschaften der Ausgangswellenfront (S₀), die im entsprechenden reduzierten Bereich existieren, reproduziert;
- optische Wege, die eingerichtet sind, um zwei Teilstrahlen (F"₁, F'₂), die jeweils von zwei unterschiedlichen reduzierten Bereichen innerhalb des optischen Eingang (10) ausgehen und die jeder auf einem unterschiedlichen optischen Weg verlaufen, übereinanderzulegen;
- zumindest einen Bilddetektor (13), der dazu angeordnet ist, Interferenzmuster, die durch die übereinandergelegten Teilstrahlen (F"₁, F'₂) erzeugt werden, zu erfassen;
- ein Verarbeitungsmodul (14), das dazu angepasst ist, anhand der Interferenzmuster Differenzen in einer Amplitude (p) und Neigung (i), die für die Ausgangswellenfront (S₀) zwischen den reduzierten Bereichen, von denen die übereinandergelegten Teilstrahlen ausgehen, existieren, zu bestimmen; und
- eine Maske(11), die dazu angepasst ist, mittels Maskenöffnungen getrennte Interessensbereiche (ZI) innerhalb des optischen Eingangs (10) als reduzierte Bereiche auszuwählen, indem die Ausgangswellenfront (S₀) außerhalb der Interessensbereiche zumindest teilweise verborgen wird oder indem Lichtstrahlen, die nicht von den Interessensbereichen ausgehen, zumindest teilweise verborgen werden, sodass getrennte Abschnitte (P) des Bilddetektors (13) jeweils Interessensbereichspaaren, die innerhalb des optischen Eingangs benachbart sind, zugeordnet sind,
**dadurch gekennzeichnet, dass** die Maske (11) und der Strahlungsteiler zusammen durch einen räumlichen Intensitätsmodulator ausgebildet sind.

2. Wellenfrontanalysator nach Anspruch 1, wobei der Strahlungsteiler ein Beugungsnetz (12) umfasst.

3. Wellenfrontanalysator nach Anspruch 2, der so eingerichtet ist, dass die Teilstrahlen (F'₁, F"₁, F'₂, F"₂), die durch das Diffraktionsnetz (12) für jeden Strahl (F₁, F₂) erzeugt werden, den Werten +1 und -1 für eine oder mehrere Beugungsordnungszahlen entsprechen.

4. Wellenfrontanalysator nach einem der vorangegangenen Ansprüche, wobei die Maske (11) und der Bilddetektor (13) optisch konjugiert sind.

5. Wellenfrontanalysator nach einem der vorangegangenen Ansprüche, ferner umfassend ein afokales optisches System (100), das auf einer Strahlungsbahn zwischen dem optischen Eingang (10) und dem Bilddetektor (13) angeordnet ist, um gegenüber den durch den Bilddetektor erfassten Interferenzmustern die Ausgangswellenfront (S₀) durch eine effektive räumliche Homothetie innerhalb des optischen Eingangs umzuwandeln.

6. Wellenfrontanalysator nach einem der vorangegangenen Ansprüche einschließlich Anspruch 2, wobei die Maske (11) dazu angepasst ist, die Interessensbereiche (ZI) nach einem hexagonalen Verteilungsnetz der Interessensbereiche innerhalb des optischen Eingangs (10) auszuwählen, und das Diffraktionsnetz (12) zweidimensional mit hexagonalem Muster und so ausgerichtet ist, dass Symmetrieachsen des Diffraktionsnetzes 90 ° zu Symmetrieachsen der Maske um eine optische Achse (Δ) des Wellenfrontanalysators sind.

7. Wellenfrontanalysator nach einem der vorangegangenen Ansprüche, wobei die Maske (11) dergestalt ist, dass jegliche zwei der Interessensbereiche (ZI), die benachbart sind, eine selbe Form und eine selbe Größe aufweisen und durch einen verbergenden Bereich der Maske, der sich zwischen den beiden benachbarten Interessensbereichen befindet, getrennt sind, wobei der verbergende Bereich groß genug ist, um eine Form einzuschließen, die identisch mit der jedes der benachbarten Interessensbereiche ist, und die die Größe der benachbarten Interessensbereiche aufweist.

8. Wellenfrontanalysator nach einem der vorangegangenen Ansprüche, wobei das Verarbeitungsmodul (14) eine Bibliothek aufgezeichneter Referenzmuster, die jeweils aus geradlinigen und parallelen Interferenzstreifen ausgebildet sind, umfasst, wobei jedes Referenzmuster mit einem Amplituden-Differenzwert und einem Neigungs-Differenzwert verknüpft ist,
und wobei zwischen zwei benachbarten Interessensbereichen (ZI) existierende Amplituden- und Neigungs-Differenzwerte abgeleitet werden, indem eine maximale Koinzidenz zwischen dem Interferenzmuster, das den beiden Interessensbereichen entspricht, und einem der aufgezeichneten Referenzmuster gesucht wird.

9. Wellenfrontanalysator nach einem der vorangegangenen Ansprüche, wobei das Verarbeitungsmodul (14) dazu angepasst ist, einen Wert für die zwischen zwei benachbarten Interessensbereichen (ZI) existierende Amplituden(p)-Differenz anhand einer Streifenquerverschiebung, die in dem den beiden Interessensbereichen entsprechenden Interferenzmuster existiert, abzuleiten und
einen Wert für die zwischen zwei benachbarten Interessensbereichen (ZI) existierende Neigungs(i)-Differenz anhand eines Streifenzwischenabstands, der in dem den beiden Interessensbereichen entsprechenden Interferenzmuster existiert, abzuleiten.

10. Wellenfrontanalysator nach einem der vorangegangenen Ansprüche, ferner umfassend:
- ein spektrales Trennungssystem, das dazu angepasst ist, zumindest zwei spektrale Komponenten der durch den optischen Eingang (10) empfangenen Lichtstrahlung voneinander zu trennen,
und wobei der Wellenfrontanalysator dazu angepasst ist, getrennt für jede spektrale Komponente die durch die übereinandergelegten Teilstrahlen (F"₁, F'₂) erzeugten Interferenzmuster zu erfassen und die Amplituden(p)- und Neigungs(i)-Differenzen für jede spektrale Komponente anhand der für die spektrale Komponente erfassten Interferenzmuster zu bestimmen.

11. Verfahren zum Bestimmen der Amplituden(p)- und Neigungs(i)-Differenzen zwischen einzelnen Wellenfronten von Lichtstrahlen (F₁, F₂), die Interferenzen erzeugen können, **dadurch gekennzeichnet, dass** es die folgenden Schritt umfasst:
- Bereitstellen eines Interferenz-Wellenfrontanalysators nach einem der Ansprüche 1 bis 10;
- Lenken jedes Lichtstrahls (F₁, F₂) auf einen unterschiedlichen Interessensbereich (ZI) unter Verwendung der Interessensbereiche, die im optischen Eingang (10) des Wellenfrontanalysators benachbart sind, und
- Aktivieren des Bilddetektors (13) und des Verarbeitungsmoduls (14) zum Bestimmen der Amplituden(p)- und Neigungs(t)-Differenzen, die zwischen einzelnen Wellenfronten, deren Lichtstrahlen (F₁, F₂) auf benachbarte Interessensbereiche (ZI) gelenkt wurden, existieren.

12. Verfahren nach Anspruch 11, wobei die Lichtstrahlen (F₁, F₂) durch eine Strahlungsquelle (2100) erzeugt werden, die eingerichtet ist, damit die Strahlung gleichzeitig durch nebeneinander angeordnete Segmente (2001, 2002) eines Spiegels (2000) reflektiert wird,
und wobei für jedes Spiegelsegment (2001, 2002) ein Teil der durch das Spiegelsegment reflektierten Strahlung den Lichtstrahl (F₁, F₂) ausbildet, der auf einen der Interessensbereiche (ZI) des optischen Eingangs (10) gelenkt wird,
und wobei das Verfahren ferner das Berechnen der Amplituden-Differenzen und der Neigungs-Differenzen, die zwischen zwei benachbarten Spiegelsegmenten (2001, 2002) existieren, anhand der für die entsprechenden Lichtstrahlen bestimmten Amplituden(p)- und Neigungs(i)-Differenzen umfasst.

13. Verfahren nach Anspruch 11, wobei die Lichtstrahlen (F₁, F₂) jeweils durch getrennte Laserquellen (1000), insbesondere Faserlaserquellen, erzeugt werden.

14. Verfahren nach Anspruch 13, wobei die Laserquellen (1000) vom Impulslasertyp sind und der Wellenfrontanalysator dem Anspruch 2 entspricht und wobei das Verfahren ferner das Berechnen der Zeitdifferenzen und der Ausbreitungsrichtungsdifferenzen, die zwischen Strahlungsimpulsen existieren, die durch zwei unterschiedliche Laserquellen erzeugt werden, deren Strahlen (F₁, F₂) auf zwei benachbarte Interessensbereiche (ZI) gelenkt wurden, anhand der für die Strahlen bestimmten Amplituden(p)- und Neigungs(i)-Differenzwerte umfasst.

## Claims

1. Wavefront sensor based on interference, comprising;
- an optical input (10), intended to receive a light radiation having an initial wavefront (S₀) that extends through said optical input;
- a radiation splitter, arranged in order to produce, from light beams (F₁, F₂) that originate respectively from restricted zones within the optical input (10), at least two sub-beams (F'₁, F"₁, F'₂, F"₂) for each light beam, each sub-beam reproducing characteristics of the initial wavefront (S₀) existing in the corresponding restricted zone;
- optical paths, arranged in order to superimpose two sub-beams (F"₁, F'₂) that originate respectively from two different restricted zones within the optical input (10), and which each pass via a different optical path;
- at least one image detector (13), arranged in order to capture interference patterns that are produced by the superimposed sub-beams (F"₁, F'₂);
- a processing module (14), suitable for determining, from the interference patterns, differences in piston (p) and tilt (i) existing for the initial wavefront (S₀) between the restricted zones from which the superimposed sub-beams originate; and
- a mask (11) suitable for selecting, by means of openings in said mask, disjoint zones of interest (ZI) within the optical input (10) as restricted zones, by at least partially blocking the initial wavefront (S₀) outside said zones of interest, or by at least partially blocking light beams that do not originate from said zones of interest, so that separate portions (P) of the image detector (13) are dedicated respectively to pairs of zones of interest that are neighbouring within the optical input,
**characterized in that** the mask (11) and the radiation splitter are formed together by a spatial light modulator.

2. Wavefront sensor according to claim 1, in which the radiation splitter comprises a diffraction grating (12).

3. Wavefront sensor according to claim 2, arranged so that the sub-beams (F'₁, F"₁, F'₂, F"₂) that are produced by the diffraction grating (12) for each beam (F₁, F₂), correspond to the values +1 and -1 for one or more diffraction order numbers.

4. Wavefront sensor according to any one of the preceding claims, in which the mask (11) and the image detector (13) are optically conjugated.

5. Wavefront sensor according to any one of the preceding claims, also comprising an afocal optical system (100) arranged on a radiation path between the optical input (10) and the image detector (13), so as to transform the initial wavefront (S₀), with respect to the interference patterns that are captured by the image detector, by an homothetic spatial scaling effective within the optical input.

6. Wavefront sensor according to any one of the preceding claims, including claim 2, in which the mask (11) is suitable for selecting the zones of interest (ZI) according to a hexagonal distribution network of said zones of interest within the optical input (10), and the diffraction grating (12) is two-dimensional with a hexagonal pattern, and oriented so that axes of symmetry of the diffraction grating are at 90° to axes of symmetry of the mask, about an optical axis (Δ) of the wavefront sensor.

7. Wavefront sensor according to any one of the preceding claims, in which the mask (11) is such that any two neighbouring zones of interest (ZI) have one same shape and one same size, and are separated by a blocking zone of said mask that is situated between said two neighbouring zones of interest, said blocking zone being large enough to contain a shape that is identical to that of each of the two neighbouring zones of interest, and that is the same size as said two neighbouring zones of interest.

8. Wavefront sensor according to any one of the preceding claims, in which the processing module (14) comprises a library of stored reference patterns, which are each constituted by parallel rectilinear interference fringes, each reference pattern being associated with a value for the piston difference and a value for the tilt difference,
and in which values for the difference in piston and tilt existing between two neighbouring zones of interest (ZI) are deduced by searching for a best match between the interference pattern corresponding to said two zones of interest, and one of the stored reference patterns.

9. Wavefront sensor according to any one of the preceding claims, in which the processing module (14) is suitable for deducing a value for the piston difference (p) existing between two neighbouring zones of interest (ZI), from a transverse fringe shift existing in the interference pattern corresponding to said two zones of interest, and
for deducing a value for the difference in tilt (i) existing between two neighbouring zones of interest (ZI), from an interfringe spacing existing in said interference pattern corresponding to the two zones of interest.

10. Wavefront sensor according to any one of the preceding claims, also comprising:
- a spectral separation system, suitable for separating from one another at least two spectral components of the light radiation received by the optical input (10).
and the wavefront sensor being suitable for capturing separately for each spectral component, the interference patterns that are produced by the superimposed sub-beams (F"₁, F'₂), and for determining the differences in piston (p) and tilt (i) for each spectral component, from interference patterns captured for said spectral component.

11. Method for determining differences in piston (p) and tilt (i) between individual wavefronts of light beams (F₁, F₂) capable of producing interferences, **characterized in that** it comprises the following steps:
- supplying a wavefront sensor based on interference according to any one of claims 1 to 10;
- directing each light beam (F₁, F₂) onto a different zone of interest (ZI), using zones of interest that are neighbouring in the optical input (10) of the wavefront sensor; and
- activating the image detector (13) and the processing module (14) in order to determine the differences in piston (p) and tilt (i) that exist between the individual wavefronts the light beams (F₁, F₂) of which were directed onto neighbouring zones of interest (ZI).

12. Method according to claim 11, in which the light beams (F₁, F₂) are produced by a radiation source (2100) arranged so that said radiation is reflected simultaneously by juxtaposed segments (2001, 2002) of a mirror (2000),
and for each segment (2001, 2002) of the mirror, a part of the radiation that is reflected by said mirror segment forms the light beam (F₁, F₂) that is directed to one of the zones of interest (ZI) of the optical input (10).
and the method also comprises calculating height differences and inclination differences that exist between two neighbouring segments (2001, 2002) of the mirror, from values for the differences in piston (p) and tilt (i) that are determined for the corresponding light beams.

13. Method according to claim 11, in which the light beams (F₁, F₂) are produced respectively by separate laser sources (1000), in particular fibre laser sources.

14. Method according to claim 13, in which the laser sources (1000) are of pulsed laser type and the wavefront sensor is according to claim 2,
and the method also comprises calculating time differences and direction-of-propagation differences that exist between pulses of radiation that are produced by two different laser sources, the beams (F₁, F₂) of which were directed onto two neighbouring zones of interest (ZI), from the values for the differences in piston (p) and tilt (i) that are determined for said beams.
